# EUROPÄISCHE PATENTSCHRIFT

(11) **EP 1 868 814 B1**
(45) Veröffentlichungstag und Bekanntmachung des Hinweises auf die Patenterteilung: **10.10.2018**
(21) Anmeldenummer: 06724189.3
(22) Anmeldetag: 10.04.2006
(51) Int. Cl.: B41F 13/54, G06F 17/21

(54) **VERFAHREN, IMPLEMENTIERT IN EINEM MANAGEMENT INFORMATION SYSTEM, ZUR AUTOMATISCHEN BERECHNUNG EINES AUSSCHIESSSCHEMAS**
METHOD IMPLEMENTED IN A MANAGEMENT INFORMATION SYSTEM FOR AUTOMATICALLY CALCULATING A JUSTIFICATION PATTERN
PROCEDE MIS EN OEUVRE DANS UN SYSTEME D'INFORMATION DE GESTION, POUR REALISER UN CALCUL AUTOMATIQUE D'UN SCHEMA D'IMPOSITION

(30) Priorität: 11.04.2005 DE 102005016749
(43) Veröffentlichungstag der Anmeldung: 26.12.2007
(73) Patentinhaber: HP PPS Austria GmbH, 1120 Vienna (AT)
(72) Erfinder: REICHHART, Dieter, 52249 Eschweiler (DE)
(74) Vertreter: Samson & Partner Patentanwälte mbB
(86) Internationale Anmeldenummer: PCT/EP2006/003255
(87) Internationale Veröffentlichungsnummer: WO 2006/108593

(56) Entgegenhaltungen:
- US-A1- 2004 218 217

## Beschreibung

Die Erfindung betrifft ein Verfahren, implementiert in einem Management Information System, zur automatischen Berechnung zur Bestimmung eines Ausschießschemas, das zur Herstellung eines Druckwerks eine Zuordnung einer Folge von Seiten des Druckwerks auf Felder eines Bogens definiert, in die der Bogen anhand einer Bruchfolge zeilen- und spaltenweise gegliedert wird, wobei die Bruchfolge die Folge der den Feldern zugeordneten Seiten im Druckwerk definiert.

Zur Herstellung eines mehrseitigen Druckwerks in allgemein bekannten Druckverfahren, beispielsweise im Offset-, Hoch-, Tief-, Flexo- oder Digitaldruck werden mehrere Seiten gemeinsam auf einem großformatigen Bogen gedruckt. Beispielsweise kann eine 16-seitige Zeitschrift im DIN-Format A4 auf einem einzelnen Bogen in dem Standardformat 63 x 88 cm (doppelseitig) gedruckt werden.

Als "Bogen" wird in der vorliegenden Schrift im Rahmen der Herstellung eines Druckwerks die plane Papierware in verschiedenen Erscheinungsformen bezeichnet: Ein "Rohbogen" aus der Papiermaschine wird gegebenenfalls auf ein für die Druckmaschine verarbeitbares Format zum "Druckbogen" beschnitten, der Druckbogen kann im weiteren Verlauf zu "Teilbögen" zerschnitten werden, Druck- oder Teilbögen werden als "Falzbögen" in der Falzmaschine oder in einem Falzaggregat gefalzt (oder "gebrochen"), zu einem "Rohblock" gegebenenfalls zusammengetragen, der schließlich beispielsweise im Sammelhefter oder im Klebebinder im "Bund" geheftet oder gebunden und an den übrigen Kanten im Block geschnitten wird.

Durch Variationen dieses Grundprinzips entsteht die bekannte Vielfalt gebundener Druckwerke: Beispielsweise kann der Block zur Herstellung einer Illustrierten mit einem Umschlag aus einem schwereren, aufwändiger bedruckten Papier versehen werden, zur Herstellung eines Buchs werden mehrere Rohblöcke durch Fadenheftung an einen gemeinsamen Rücken gebunden.

Ein Falzbogen wird gefalzt durch Kreuzbruch oder Parallelfalz. Beim Kreuzbruch erfolgt jeder weitere Bruch des Bogens quer, beim Parallelbruch parallel zum Vorangehenden. Beim Zickzack- oder Leporellofalz erfolgen die Brüche parallel und in wechselnder Richtung, beim Wickelfalz liegen die Falzbrüche parallel und das Papier wird aufgewickelt. Eine Kombination von Kreuzbruch und Parallelfalzung wird als Gemischtfalzung bezeichnet. Beim Falzen sind die Laufrichtung des Papiers und insbesondere die Grammatur (das Papiergewicht) zu beachten: Ein Vierbruchfalz (für eine Buchbindung) wird im Allgemeinen bis zu 80 g, ein Dreibruchfalz bis zu 150 g, ein Zweibruchfalz bis zu 170 g und ein Einbruchfalz noch bis zu einer Grammatur von 200 g ausgeführt.

Durch das Falzen und Brechen wird der Bogen zeilen- und spaltenweise in Felder gegliedert. In diesen Feldern müssen die einzelnen Seiten des Druckwerks derart angeordnet werden, dass sie im Druckwerk in der gewünschten Folge (und in der richtigen Orientierung) erscheinen. Die für ein Druckwerk erforderliche Anordnung der Seiten auf dem Bogen kann beispielsweise durch in den Rohblock eingefügte Sonderbögen verändert werden. Beispiele für derartige Sonderbögen sind kartonierte Bögen mit heraustrennbaren Postkarten, Bögen aus Transparentpapier für mehrschichtig aufgebaute Grafiken oder Bögen mit einzelnen folierten, lackierten oder anderweitig speziell behandelten Seiten. Die Tätigkeit des Anordnens der Seiten wird als "ausschießen", die Anordnung auf dem Bogen als "Ausschießschema" bezeichnet.

Ausschießschemata für Druckbögen werden mittels allgemein bekannter, hoch spezialisierter CAD- ("Computer Aided Design"-) Systeme entworfen. Gegenüber dem manuellen Entwurf bieten derartige Systeme eine Vielzahl von Vorteilen. Durch die Verknüpfung von Maßen bieten CAD-Systeme einerseits eine automatische Plausibilitätskontrolle, andererseits können bei der Änderung eines Maßes (beispielsweise des Seitenformats) verknüpfte Maße (beispielsweise die Breite eines Beschnittbereichs, die Lage oder Größe einer Markierung) automatisch nachgeführt werden. Insbesondere können Auschießschemata mit geringem Aufwand archiviert werden und stehen so als Grundlage für spätere ähnliche Anwendungen zur Verfügung.

Ein solches hoch spezialisiertes CAD-System, das ein Verfahren der eingangs genannten Art zur Bestimmung eines Ausschießschemas realisiert, wird beispielsweise unter dem Handelsnamen "Upfront" von Creo Inc., Canada vertrieben. In dem bekannten CAD-System werden Auschießschemata als so genannte "section plans" in einer Bibliothek bereitgestellt. Für jedes Ausschießschema werden in der Bibliothek die konkreten Maße des Druck- oder Falzbogens, der einzelnen Seiten des Druckwerks und der Beschnittbereiche sowie die Lage und Benummerung der Seiten auf dem Bogen definiert. Ein Verfahren der eingangs beschriebenen Art ist weiterhin bekannt aus dem unter dem Handelsnamen "Prinect Signa Station" von der Heidelberger Druckmaschinen AG, Deutschland vertriebenen System zur Steuerung einer Druckvorstufe. Auch hier wird ein vordefiniertes Ausschießschema aus einer Bibliothek anhand eingegebener Parameter des Druckwerks sowie von Parametern der ausführenden Systeme, insbesondere Druckvorstufen-, Druck- und Falzmaschinen ausgewählt.

US-Patentanmeldungsveröffentlichung US 2004/0218217 A1 (Dechamps), veröffentlicht am 4 November 2004, beschreibt ein automatisches Verfahren zur Berechnung eines Ausschießschemas.

Zur Bestimmung eines Ausschießschemas für ein in der Bibliothek nicht definiertes spezielles Bogenformat, für eine sich aus einem Spezialformat ergebende außergewöhnliche Bruchfolge, für ein Druckwerk mit einem in der Bibliothek nicht definierten Seitenformat oder nur einer nicht katalogisierten Seitenzahl muss nach dem bekannten Verfahren - im günstigsten Fall basierend auf einem möglichst ähnlichen vorhandenen Schema- jeweils durch manuelle Eingabe der Parameter ein neues Ausschießschema bestimmt werden. Die Erstellung mehrerer verschiedener Auschießschemata und deren Vergleich unter fertigungstechnischen, ablauftechnischen oder wirtschaftlichen Gesichtspunkten ist nach dem bekannten Verfahren unwirtschaftlich.

### Aufgabe

Der Erfindung liegt die Aufgabe zugrunde, die Bestimmung eines neuen Ausschießschemas zu vereinfachen.

### Lösung

Ausgehend von den bekannten Verfahren wird nach der Erfindung vorgeschlagen, dass zunächst anhand einerseits eines Bogenformats des Bogens und andererseits von Nettoformaten der Seiten aus einer Liste zeilen- und spaltenweiser Gliederungen des Bogens eine mögliche Gliederung des Bogens und sodann eine dieser Gliederung zugeordnete Bruchfolge gewählt wird und dass schließlich anhand einerseits der gewählten Bruchfolge und andererseits der Folge der Seiten im Druckwerk das Ausschießschema bestimmt wird.

Die Erfindung basiert auf der - zunächst trivialen - Erkenntnis, dass verschiedene Bruchfolgen dieselbe Gliederung eines Bogens in zeilen- und spaltenweise angeordnete Felder definieren. Beispielsweise wird dieselbe typische Gliederung des Standardformats 63 x 88 cm für 16 Seiten DIN A4 (21 x 29,7 cm) auf acht in zwei Zeilen und vier Spalten angeordnete Seiten im Hochformat gleichermaßen durch einen Kreuzbruch wie durch Gemischtfalze mit einem ersten Falz in Laufrichtung und anschließendem Zickzack- oder Wickelfalz quer zur Laufrichtung definiert.

Für jede Gliederung sind die Höhe und Breite der Felder als Verhältniszahlen im Bezug auf das zu verwendende Bogenformat definiert. Diese Verhältniszahlen definieren zugleich - abgesehen von technisch erforderlichen Beschnittbereichen oder Überfalzen im Wesentlichen unabhängig von der verwendeten Bruchfolge - Höchstwerte für die herstellbaren Seitenhöhen und -breiten. Für den Druck eines 16-Seiters bei einer Gliederung von acht Seiten in zwei Zeilen und vier Spalten ist beispielsweise die Seitenhöhe durch die Hälfte der Bogenbreite und die Seitenbreite durch ein Viertel der Bogenlänge begrenzt.

Die Frage, ob eine Gliederung eines Bogens zur Herstellung eines konkreten Druckwerks möglich ist, ist also im Prinzip durch einen einfachen Vergleich zweier Zahlenpaare - nämlich jeweils der Höhen und Breiten des vorgegebenen Seiten- und des Bogenformats - zu beantworten. Die anschließende Wahl der Bruchfolge ist zwar durch die Wahl der Gliederung eingeschränkt, aber - bei mehr als einem Feld - nicht abschließend vorgegeben. Sie kann abhängig von dem gewählten Papierformat die möglichen Falzvarianten verschiedener verfügbarer Maschinen oder andere Randbedingungen - beispielsweise das Papiergewicht - berücksichtigen.

Die Bruchfolge definiert in allgemeiner Form die Anordnung der in dem Druckwerk aufeinander folgenden Seiten auf dem Bogen. Für einen 16-Seiter eines Buchs im Kreuzbruch können beispielsweise ausgehend von einer ersten Seite mit der Nummerierung *n* auf der einen Seite des Bogens in der oberen Zeile die Druckseiten *n* + *4*, *n* + *11*, *n* + *8* und *n* + *7*, in der unteren Zeile die Seiten *n* + *3*, *n* + *12, n* + *15* und *n* und auf der anderen Seite die Druckseiten *n* + *6*, *n* + *9*, *n* + *10* und *n* + 5 beziehungsweise *n* + *1*, *n* + *14*, *n* + *13* und *n* + *2* angeordnet sein. Für einen dritten Block eines Buches beginnend mit der Seitennummer 33 liegen entsprechend auf der einen Seite des Bogens die Seitennummem 37, 44, 41 und 40 sowie 36, 45, 48 und 33 und auf der anderen Seite die Nummern 39, 42, 43 und 38 sowie 34, 47, 46 und 35. Durch die Wahl der Bruchfolge ist bei vorgegebener Startnummerierung *n* also die Anordnung aller Seiten auf den Bögen definiert.

Nach dem erfindungsgemäßen Verfahren erfolgt die Bestimmung eines Ausschießschemas in drei Schritten: Zunächst wird allein durch einen Vergleich des Nettoformats der Seiten mit den Formaten der Felder, die durch die bekannten Gliederungen auf den verfügbaren Bogenformaten definiert sind, eine fertigungstechnisch mögliche Gliederung gewählt. Die darauf basierende Wahl der Bruchfolge wird zumeist - sofern überhaupt die verfügbaren Maschinen mehrere Möglichkeiten eröffnen - durch fertigungstechnische Randbedingungen nahe gelegt. Anhand der Startseite wird zuletzt mit der aus der Bruchfolge vorgegebenen Anordnung der Seiten des Druckwerks auf dem Bogen, der Bindeart und der Reihenfolge der buchbinderischen Verarbeitung der einzelnen Falzbögen das Ausschießschema vollständig bestimmt.

Gegenüber der manuellen Bestimmung aller Parameter, wie sie das bekannte Verfahren erfordert, ist die Bestimmung des Ausschießschemas mit dem erfindungsgemäß strukturierten Verfahren also signifikant vereinfacht. Diese vereinfachte Bestimmung des Ausschießschemas ermöglicht nun insbesondere deren Automatisierung.

Das erfindungsgemäße Verfahren ist vorteilhafter Weise auch für einen Teilbogen aus einer Mehrzahl von Teilbögen eines Druckbogens anwendbar. So können beispielsweise die Ausschießschemata für mehrere Rohblöcke eines kleinformatigen Druckwerks auf einem großformatigen Druckbogen bestimmt werden, der nach dem Druck zunächst in mehrere Falzbögen geschnitten wird. Auch eine unterschiedliche Weiterverarbeitung der Teilbögen ist denkbar. Beispielsweise kann ein Teilbogen zur Herstellung eines eingehefteten Leporellos in einem langgestreckten Sonderformat gedruckt werden oder verschiedene Teilbögen können verschiedenen Druckwerken oder verschiedensprachigen Ausgaben desselben Druckwerks zugeordnet sein.

Bevorzugt wird zur Ausführung des erfindungsgemäßen Verfahrens das Bogenformat aus einer Liste von Bogenformaten gewählt. Das erfindungsgemäße Verfahren ist dann universell für die bereitgestellten Bogenformate einsetzbar.

Im Rahmen eines erfindungsgemäßen Verfahrens werden vorzugsweise das Bogenformat und die Gliederung desselben derart gewählt, bei deren Verwendung der Abfall relativ zum Druckbogenformat minimiert wird. Bereits der Vergleich der Seiten- und Bogenformate, also der erste Schritt der automatisierten Bestimmung des Ausschießschemas ergibt für jede Gliederung den anfallenden Abfall und ermöglicht damit frühzeitig eine Selektion nach diesem Kriterium. Da die Papierkosten etwa 40 % der Herstellungskosten eines durchschnittlichen Druckwerks ausmachen, ist das erfindungsgemäße Verfahren unter dem Aspekt der Wirtschaftlichkeit besonders interessant.

Weiterhin wird im Rahmen eines erfindungsgemäßen Verfahrens vorzugsweise die Bruchfolge derart gewählt, dass sie einen minimalen Kostenaufwand verursacht. Spezielle Bruchfolgen wie der Leporellofalz oder seltener verwendete Gemischtfalzungen können häufig nicht auf Standardmaschinen gefertigt werden, sondern erfordern den Einsatz spezieller - in Anschaffung, Einrichtung und Unterhaltung teurer - Maschinen, gegebenenfalls sogar die Vergabe eines Unterauftrags an einen externen Anbieter. Wenn anschließend an die Bestimmung der Gliederung des Bogens die Bruchfolge auf den Kostenaufwand optimiert wird, ermöglicht das erfindungsgemäße Verfahren eine besonders kostengünstige Herstellung des Druckwerks.

Kostenfaktoren wie der Abfallanteil und die Wahl der Bruchfolge, aber auch beispielsweise mit einzelnen Bogenformaten verknüpfte spezifische Herstellungs- oder Lagerkosten oder Kosten durch eine verzögerte Auslieferung des Druckwerks wegen des Einsatzes einer Engpassmaschine können im Rahmen eines erfindungsgemäßen Verfahrens bei der Auswahl des Druckbogenformats, der Gliederung und der Bruchfolge berücksichtigt werden.

### Ausführungsbeispiel

Das erfindungsgemäße Verfahren wird nachfolgend beispielhaft anhand eines fiktiven Auftrags für die Herstellung eines Druckwerks und der Kalkulation dieses Auftrags in einer gleichfalls fiktiven Offsetdruckerei erläutert. Es zeigen
- Fig. 1: eine Baumstruktur des Druckwerks,
- Fig. 2: eine Aufteilung,
- Fig. 3: einen ersten Falzbogen,
- Fig. 4: einen zweiten Falzbogen,
- Fig. 5: einen dritten Falzbogen und
- Fig. 6: einen vierten Falzbogen.

In der Offsetdruckerei ist zur integrierten Produktionsplanung und -steuerung ein Management Information System (MIS) installiert. Das MIS weist neben andern Modulen ein Kalkulationsmodul auf, das die Erstellung eines Angebots für die Herstellung eines Druckwerks unterstützt. Der Auftrag umfasst die drucktechnische Herstellung einer drahtgehefteten Broschur mit 28 Seiten im Hochformat DIN A4. Die Broschur ist durchgehend vierfarbig, der Druck soll auf eine Papierqualität "Bilderdruck, holzfrei", Sorte "Sprint Bilderdruck" mit einem Flächengewicht von 115 g/m² erfolgen, der Druck wird nicht angeschnitten.

In dem MIS ist eine Konfigurationsdatei hinterlegt, die unter anderem abhängig von der Bindung des Druckwerks, von Seitenformat und -orientierung, von den Parametern des Farbdrucks und des Papiers eine nach fertigungstechnischem Aufwand sortierte Liste möglicher Aufteilungen enthält. Als "Aufteilung" wird hier eine im Rahmen der Fertigung eines Druckwerks nicht weiter geschnittene Einheit von Seiten, quasi das unteilbare "Atom" des Druckwerks bezeichnet. Eine Aufteilung weist höchstens die Abmessungen des Druckbogens auf und umfasst höchstens dieselbe Anzahl Seiten wie dieser. Bei der Fertigung eines gehefteten Druckwerks - wie in diesem Beispiel - werden (zuvor gedruckte sowie gegebenenfalls geschnittene und gefalzte) Teilbögen mit jeweils einer Aufteilung auf den Stationen des Sammelhefters zusammengelegt.

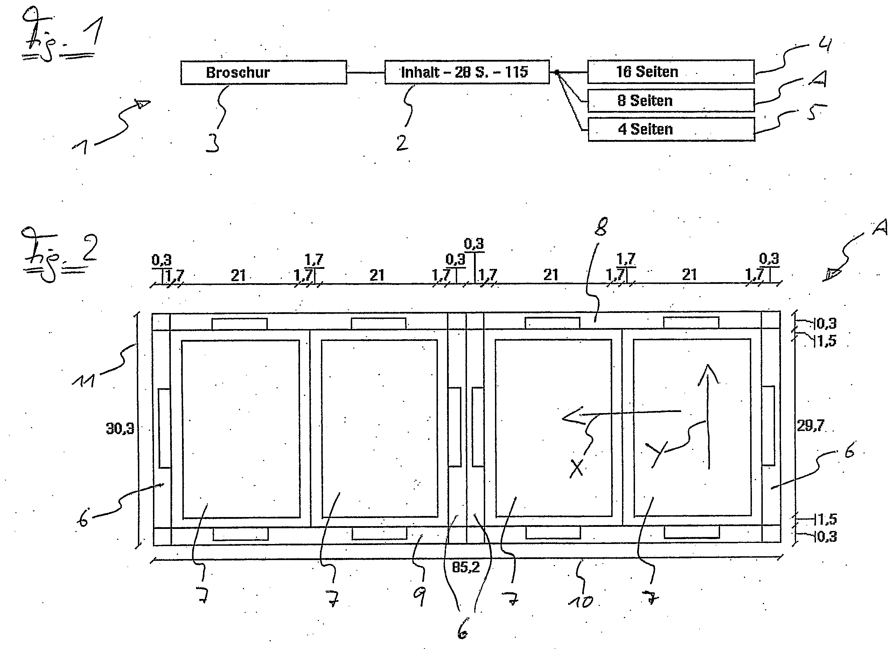

In der Konfigurationsdatei sind für die genannten Parameter (mit zunehmendem Fertigungsaufwand) Aufteilungen mit 16, 8, 4, und 12 Seiten hinterlegt. Anhand der Seitenzahl wählt das MIS aus diesen der Reihe nach diejenigen Aufteilungen mit dem geringsten Fertigungsaufwand und stellt das Ergebnis gemäß Figur 1 in einer Baumstruktur 1 graphisch dar: Das MIS empfiehlt, den 28-seitigen (einzigen) Produktteil 2 "Inhalt" des Druckwerks 3 "Broschur" in einer ersten Aufteilung 4 mit 16, einer zweiten Aufteilung A mit 8 und einer dritten Aufteilung 5 mit 4 Seiten zu produzieren.

Auf Grundlage der in der Konfigurationsdatei hinterlegten geometrischen Beschreibungen der einzelnen Aufteilungen 4, A, 5 stellt das MIS diese - wie in Figur 2 beispielhaft für die zweite Aufteilung A wiedergegeben - einschließlich Vermaßung grafisch dar (Beschnitte werden standardmäßig mit einer Breite von 0,3 cm angesetzt): Die zweite Aufteilung A (für den 8-Seiter) weist in Laufrichtung X zunächst einen Seitenbeschnitt 6 gefolgt von zwei Seiten 7 (im Bund), zwei weiteren Seitenbeschnitten 6, wiederum zwei Seiten 7 (im Bund) und einen abschließenden Seitenbeschnitt 6 auf. In Querrichtung Y weist die zweite Aufteilung A einen Anlagebeschnitt 8 gefolgt von einer Seite 7 und einen abschließenden Gegenbeschnitt 9 auf.

Die folgende tabellarische Übersicht zeigt für jede der vorgeschlagenen Aufteilungen 4, A, 5 in Laufrichtung X und in Querrichtung Y die Anzahl der Felder, die summierten Maße der Beschnitte und die daraus resultierenden Gesamtlängen 10, 11:

| Aufteilung | Umfang | X x Y | Beschnitt X x Y | Format X x Y |
|---|---|---|---|---|
| 4 | 16 Seiten | 4 x 2 | 1,2 x 1,2 cm | 85,2 x 60,6 cm |
| A | 8 Seiten | 4 x 1 | 1,2 x 0,6 cm | 85,2 x 30,3 cm |
| 5 | 4 Seiten | 2 x 1 | 0,6 x 0,6 cm | 42,6 x 30,3 cm |

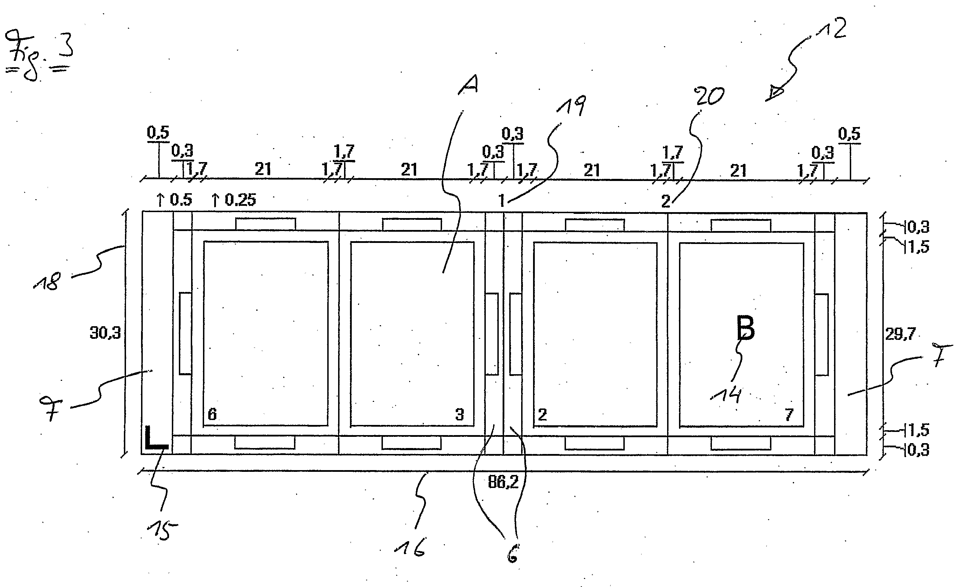

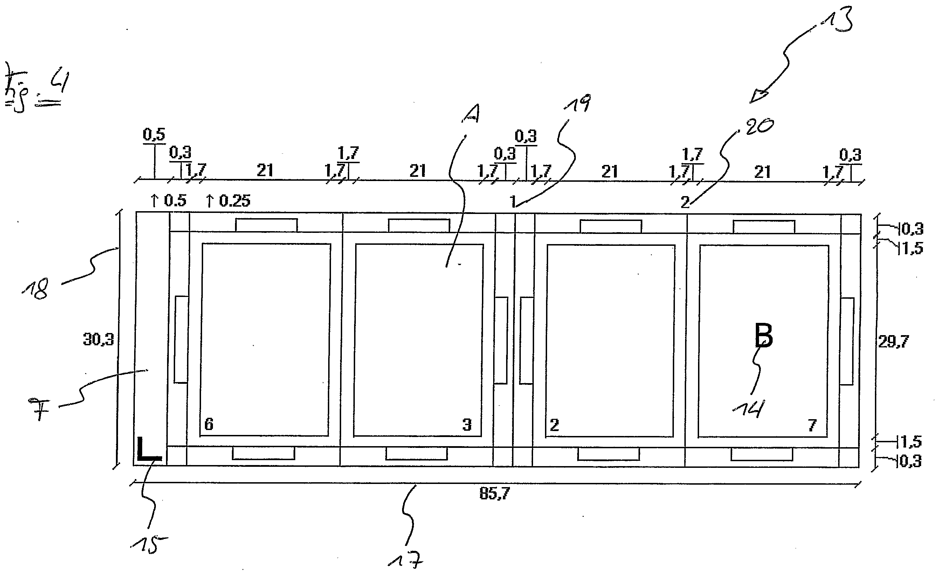

Für jede Aufteilung 4, A, 5 sind in der Konfigurationsdatei außerdem nach fertigungstechnischem Aufwand sortiert mögliche Falzbögen genannt. Basierend auf den gleichfalls in der Konfigurationsdatei hinterlegten geometrischen Beschreibungen der Falzbögen für die gewählten Aufteilungen und der zugeordneten Bruchfolgen stellt das MIS - wie in den Figuren 3 und 4 beispielhaft (für den 8-Seiter) wiedergegeben - die möglichen Falzbögen 12, 13 einschließlich Vermaßung grafisch dar.

Als Bezugssystem der Bruchfolge ist auf den Falzbögen 12, 13 zunächst durch Basisseitenmarken 14 gekennzeichnet, welche der Seiten 7 (die so genannte "Basisseite") beim Falzen in derselben Orientierung "liegen bleibt". Durch die zusätzlichen Falzanlagenmarken 15 ist die Lage der Falzbögen 12, 13 beim Durchlaufen der Falzmaschine eindeutig festgelegt
Die folgende tabellarische Übersicht zeigt für die für den 8-Seiter möglichen Falzbögen 12, 13 die Folge der geometrischen Elemente (Überfalze F und Aufteilungen A) in Laufrichtung X und wiederum in Laufrichtung X und in Querrichtung Y die Anzahl der Aufteilungen A, die summierten Maße der zusätzlichen Beschnitte durch die Überfalze F und die daraus resultierenden Gesamtlängen 16, 17, 18:

| Falzbogen | Elemente | X x Y | Beschnitt X x Y | Format X x Y |
|---|---|---|---|---|
| 12 | F-A-F | 1 x 1 | 1,0 x 0,0 cm | 86,2 x 30,3 cm |
| 13 | A-F | 1 x 1 | 0,5 x 0,0 cm | 85,7 x 30,3 cm |

Im Rahmen der Bruchfolge ist außerdem die Abfolge der Brüche definiert und in welche Richtung (nach oben oder nach unten bezüglich der Basisseite) diese gehen: Die Falzbögen 12, 13 gemäß den Figuren 3 und 4 werden jeweils zunächst an der ersten Falzmarke 19 in Laufrichtung X ungefähr auf der Hälfte und dann an der zweiten Falzmarke 20 gleichfalls in Laufrichtung X ungefähr bei einem Viertel der Gesamtlänge 16, 17 in Laufrichtung X jeweils nach oben gefalzt (Falzart "F8-2" gemäß der JDF Specification Release 1.2, CIP4, Zürich/CH 2004, Seite 368).

Zuletzt sind in der Bruchfolge auch die Positionen von Überfalzen F definiert, die durch das MIS standardmäßig mit einer Breite von 0,5 cm angesetzt werden. So ergibt sich aus der Bruchfolge unmittelbar die Geometrie des Falzbogens und die Seitenaufteilung.

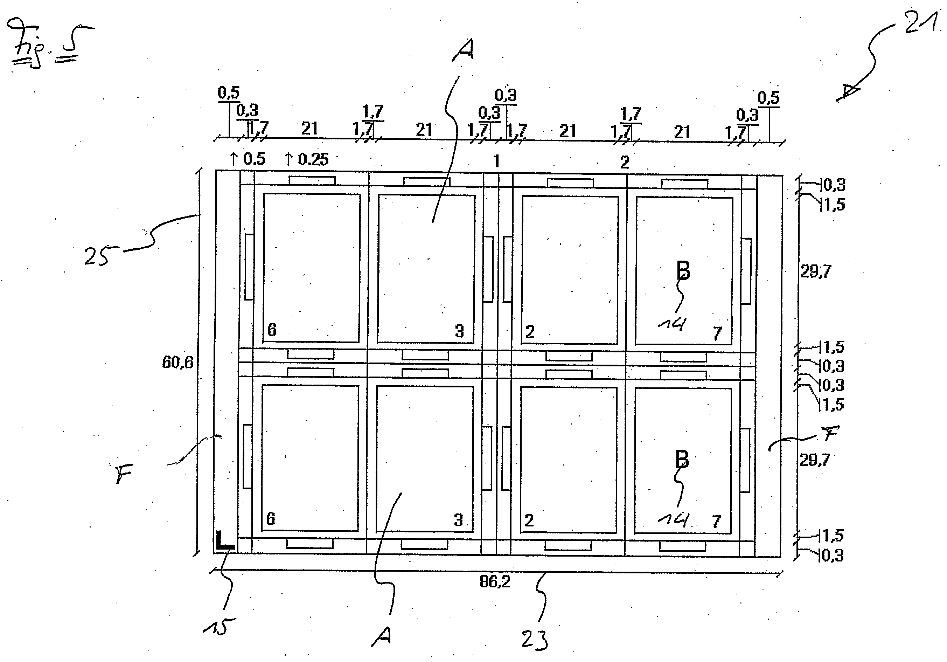

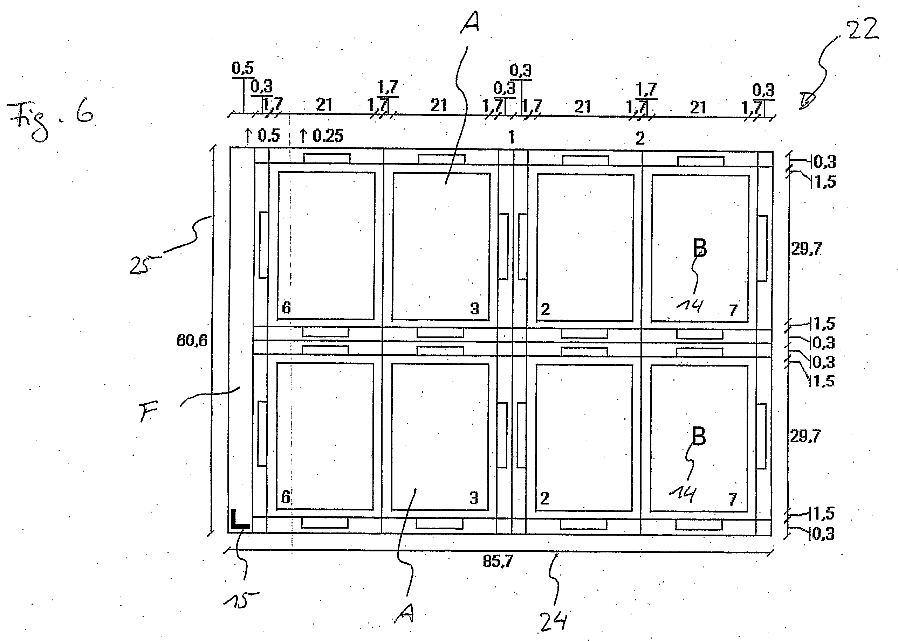

Anstelle der Belegung des jeweiligen Falzbogens 12, 13 mit einer Aufteilung A ("Einfachnutzen") gemäß den Figuren 3 und 4 können auch - wie in den Figuren 5 und 6 beispielhaft dargestellt - mehrere Aufteilungen A auf einem Falzbogen 21, 22 angeordnet werden ("Mehrfachnutzen").

Die folgende tabellarische Übersicht zeigt für diese Falzbögen 21, 22 mit Doppelnutzen für Laufrichtung X und wiederum in Laufrichtung X und in Querrichtung Y die Anzahl der Aufteilungen A, die summierten Maße der zusätzlichen Beschnitte und die daraus resultierenden Gesamtlängen 23, 24, 25:

| Falzbogen | Elemente | X x Y | Beschnitt X x Y | Format X x Y |
|---|---|---|---|---|
| 21 | F-A-F | 1 x 2 | 1,0 x 0,0 cm | 86,2 x 60,6 cm |
| 22 | A-F | 1 x 2 | 0,5 x 0,0 cm | 85,7 x 60,6 cm |

Auch die Falzbögen 21, 22 gemäß den Figuren 5 und 6 werden gemäß der JDF-Falzart "F8-2" gebrochen und anschließend in der Laufrichtung X geschnitten.

Nach der Auswahl der Aufteilungen 4, A, 5 und darauf basierend der Ausschießschemata (beispielhaft dargestellt in den Geometrien der Falzbögen 12, 13, 21, 22) und der zugehörigen Bruchfolgen stehen dem MIS alle Informationen zur Ermittlung der Druckbögen und der weiteren nachfolgenden Produktionsschritte zur Verfügung.

Das MIS ermöglicht - entweder ausgehend von automatisch ermittelten Parametern oder in Form von Voreinstellungen - die manuelle Festlegung der Aufteilung wie der Bruchfolge je Falzbogen 21, 22 sowie der Zusammenstellung der Druckbögen insgesamt. Durch die logische Verknüpfung der einzelnen Schritte des erfindungsgemäßen Verfahrens und deren Implementierung in dem MIS können mit diesem nach jeder Änderung einzelner Parameter die entsprechend geänderten Ausschießschemata zur Herstellung des Druckwerks und daraus die entsprechenden Druckbögen mit der jeweiligen Zuordnung der Seiten des Druckwerks automatisch "on the fly" berechnet werden.

### In den Figuren sind

- 1: Baumstruktur
- 2: Produktteil
- 3: Druckwerk
- 4: erste Aufteilung
- A: zweite Aufteilung
- 5: dritte Aufteilung
- X: Laufrichtung
- 6: Seitenbeschnitt
- 7: Seite (im Bund)
- Y: Querrichtung
- 8: Anlagebeschnitt
- 9: Gegenbeschnitt
- 10: Gesamtlänge in Laufrichtung
- 11: Gesamtlänge in Querrichtung
- 12: Falzbogen
- 13: Falzbogen
- 14: Basisseitenmarke
- 15: Falzanlagenmarke
- F: Überfalz
- 16: Gesamtlänge in Laufrichtung
- 17: Gesamtlänge in Laufrichtung
- 18: Gesamtlänge in Querrichtung
- 19: erste Falzmarke
- 20: zweite Falzmarke
- 21: Falzbogen
- 22: Falzbogen
- 23: Gesamtlänge in Laufrichtung
- 24: Gesamtlänge in Laufrichtung
- 25: Gesamtlänge in Querrichtung

## Patentansprüche

1. Verfahren, implementiert in einem Management Information System, zur automatischen Berechnung eines Ausschießschemas, das zur Herstellung eines Druckwerks (3) eine Zuordnung einer Folge von Seiten (7) des Druckwerks (3) auf Felder eines Bogens definiert, in die der Bogen anhand einer Bruchfolge zeilen- und spaltenweise gegliedert wird, wobei die Bruchfolge die Folge der den Feldern zugeordneten Seiten (7) im Druckwerk (3) definiert, ***dadurch gekennzeichnet, dass*** zunächst anhand einerseits eines Bogenformats des Bogens und andererseits von Nettoformaten der Seiten (7) aus einer Liste von Gliederungen eine mögliche Gliederung des Bogens und sodann eine dieser Gliederung zugeordnete Bruchfolge gewählt wird, wobei jede Gliederung unabhängig vom Bogenformat definiert, wie die Felder zeilen- und spaltenweise angeordnet sind, und dass schließlich anhand einerseits der gewählten Bruchfolge und andererseits der Folge der Seiten (7) im Druckwerk (3) das Ausschießschema bestimmt wird.

2. Verfahren nach dem vorgenannten Anspruch, ***dadurch gekennzeichnet, dass*** der Bogen ein Teilbogen aus einer Mehrzahl von Teilbögen eines Druckbogens ist.

3. Verfahren nach einem der vorgenannten Ansprüche, ***dadurch gekennzeichnet, dass*** das Bogenformat aus einer Liste von Bogenformaten gewählt wird.

4. Verfahren nach dem vorgenannten Anspruch, ***dadurch gekennzeichnet, dass*** ein Bogenformat gewählt wird, bei dessen Verwendung der Abfall relativ zum Druckbogenformat minimiert wird.

5. Verfahren nach einem der vorgenannten Ansprüche, ***dadurch gekennzeichnet, dass*** die Gliederung des Bogens derart gewählt wird, dass bei deren Verwendung der Abfall relativ zum Druckbogenformat minimiert wird.

6. Verfahren nach dem vorgenannten Anspruch, ***dadurch gekennzeichnet, dass*** die Bruchfolge derart gewählt wird, dass sie einen minimalen Kostenaufwand verursacht.

## Claims

1. Method, implemented in a management information system, for automatically calculating an imposition scheme which defines an allocation of a series of pages (7) of the printed work (3) to fields of a sheet in order to produce a printed work (3), into which fields the sheet is divided into rows and columns on the basis of a folding sequence, the folding sequence defining the series of pages (7) in the printed work (3) that are allocated to the fields, ***characterized in that*** a possible segmentation of the sheet and subsequently a folding sequence associated with said segmentation is selected from a list of segmentations, initially on the basis of a sheet format of the sheet and also on the basis of net sheet sizes of the pages (7), each segmentation, irrespective of the sheet format, defining how the fields are arranged into rows and columns, and **in that**, finally, the imposition scheme is determined on the basis of the selected folding sequence and the series of pages (7) in the printed work (3).

2. Method according to the preceding claim, ***characterized in that*** the sheet is a partial sheet from a plurality of partial sheets of a printed sheet.

3. Method according to either of the preceding claims, ***characterized in that*** the sheet format is selected from a list of sheet formats.

4. Method according to the preceding claim, ***characterized in that*** a sheet format is selected, the use of which minimizes waste relative to the printed sheet format.

5. Method according to any of the preceding claims, ***characterized in that*** the segmentation of the sheet is selected in such a way that the use thereof minimizes waste relative to the printed sheet format.

6. Method according to the preceding claim, ***characterized in that*** the folding sequence is selected so as to cause minimal expense.

## Revendications

1. Procédé mis en oeuvre dans un système informatique de gestion permettant de calculer automatiquement un schéma d'imposition qui, pour créer un imprimé (3), définit l'affection d'une suite de pages (7) de l'imprimé (3) aux champs d'une feuille ; ladite affectation structure la feuille à l'aide d'une suite de sauts de colonnes et de lignes, de sorte que la suite de sauts définit la suite des pages (7) affectées aux champs dans l'imprimé (3), ***caractérisé en ce* qu'**une éventuelle structure de la feuille, puis une suite de sauts affectée à ladite structure est d'abord choisie à partir d'une liste de structures, à l'aide d'un format de feuille de la feuille ainsi que de formats nets des pages (7), de sorte que chaque structure définit, indépendamment du format de feuille, la façon dont les champs sont affectés par lignes et colonnes et que le schéma d'imposition est ensuite déterminé au moyen d'une suite de sauts sélectionnée ainsi que de la suite des pages (7) dans l'imprimé (3).

2. Procédé, selon la revendication susmentionnée, ***caractérisé en ce que*** la feuille est une feuille partielle constituée à partir de plusieurs feuilles partielles d'un imprimé.

3. Procédé, selon l'une des revendications susmentionnées, ***caractérisé en ce que*** le format de feuille est choisi à partir d'une liste de formats de feuille.

4. Procédé, selon la revendication susmentionnée, *caractérisé en ce qu*'un format de feuille, pour lequel la production de déchets lors de son utilisation est minimisée par rapport au format de l'imprimé, est choisi.

5. Procédé, selon l'une des revendications susmentionnées, ***caractérisé en ce que*** la structure de la feuille est choisie de sorte que la production de déchets lors de son utilisation est minimisée par rapport au format de l'imprimé.

6. Procédé, selon la revendication susmentionnée, ***caractérisé en ce que*** la suite de sauts est choisie de sorte qu'elle engendre un coût minimal.
